# EUROPÄISCHE PATENTANMELDUNG

(11) **EP 2 685 436 A2**
(43) Veröffentlichungstag der Anmeldung: **15.01.2014**
(21) Anmeldenummer: 13450029.7
(22) Anmeldetag: 11.07.2013
(51) Int. Cl.: G07C 9/00, H04B 13/00

(54) **Schlüssel und Zutrittskontrollvorrichtung mit Schlüssel**

(30) Priorität: 12.07.2012 AT 7802012
(71) Anmelder: Evva Sicherheitstechnologie GmbH, 1120 Wien (AT)
(72) Erfinder: Enne, Reinhard J., A-1120 Wien (AT)
(74) Vertreter: Keschmann, Marc

(57) **Zusammenfassung**

Bei einem Schlüssel (5) umfassend eine Reide (8), einen eine mechanisch abtastbare Codierung aufweisenden Schlüsselbart (9) und einen elektronischen Speicher für Identifikationsdaten, der mit einem Kommunikationsmodul zum insbesondere drahtlosen Auslesen der Identifikationsdaten zusammenwirkt, ist das Kommunikationsmodul für die kapazitive Datenübertragung ausgebildet.

## Beschreibung

Die Erfindung betrifft einen Schlüssel umfassend eine Reide, einen eine mechanisch oder magnetisch abtastbare Codierung aufweisenden Schlüsselbart und einen elektronischen Speicher für Identifikationsdaten, der mit einem Kommunikationsmodul zum insbesondere drahtlosen Auslesen der Identifikationsdaten zusammenwirkt.

Die Erfindung betrifft weiters eine Vorrichtung umfassend eine Zutrittskontrollvorrichtung und einen Schlüssel, die jeweils ein Kommunikationsmodul aufweisen, um eine Datenübermittlung zwischen dem Schlüssel und der Zutrittskontrollvorrichtung zu ermöglichen, wobei der Schlüssel einen Speicher für Identifikationsdaten aufweist, der mit dem Kommunikationsmodul des Schlüssels zur Übermittlung der Identifikationsdaten an die Zutrittskontrollvorrichtung zusammenwirkt, wobei die Zutrittskontrollvorrichtung eine Auswerteschaltung zur Feststellung der Zutrittsberechtigung auf Grund der empfangenen Identifikationsdaten aufweist und die Auswerteschaltung mit einem Sperrglied zum wahlweisen Freigeben oder Sperren des Zutritts zusammenwirkt.

Elektrische oder elektronische Schlösser, insbesondere Zylinderschlösser, enthalten in der Regel zusätzlich zu mechanischen Verriegelungen, welche mit konventionellen Schlüsseln mechanisch sperrbar sind, wenigstens einen elektromagnetisch oder motorisch betätigbaren Verriegelungsmechanismus, welcher erst nach einer Identifikationsprüfung auf Basis von Identifikationsdaten freigegeben wird. Die elektronische Schaltung zur Identifikationsüberprüfung wirkt hierbei meist mit geeigneten Identifikationsmedien kontaktfrei oder mittels Kontakten zusammen, wobei in der elektronischen Auswerteschaltung eine Überprüfung erfolgt, ob das jeweilige Identifikationsmedium die Berechtigung zum Sperren des Schlosses aufweist. Nach erfolgreicher Überprüfung der Identität erfolgt dann die Freigabe des Schlosses.

Zum Sperren solcher mechatronischer Schlösser kommen Schlüssel zum Einsatz, die sowohl einen eine mechanisch oder magnetisch abtastbare Codierung aufweisenden Schlüsselbart als auch einen elektronischen Speicher für Identifikationsdaten aufweisen, wobei der Speicher mit einem Kommunikationsmodul zum insbesondere drahtlosen Auslesen der Identifikationsdaten zusammenwirkt. Solche Kombinationsschlüssel sind vielseitig einsetzbar, da nicht nur oben beschriebene Kombinationsschlösser gesperrt werden können, sondern auch Schlösser, die entweder nur eine mechanische bzw. magnetische Identifikationsabfrage oder nur eine elektronische Identifikationsprüfung umfassen. Unter einer magnetischen Identifikationsabfrage wird hierbei das Auslesen einer magnetischen Codierung eines Schlüssels gemäß der österreichischen Patentschriften AT 341901 und AT 357430 verstanden.

Für die elektronische Zutrittskontrolle mit berührungslosen Systemen gibt es mehrere Möglichkeiten. Bisher bekannte RFID-Systeme bestehen aus einem elektronischen Identifikationsmedium, wie z.B. einem elektronischen Schlüssel, auf welchem Identifikationsdaten, wie z.B. ein Identifikations- bzw. Zugangscode und/oder Zutrittsbedingungen wie z.B. berechtigte Zutrittszeit, berechtigter Zutrittstag, berechtigtes Zutrittsdatum eines Benutzers und dgl., elektronisch gespeichert sind und der oft als "Transponder" bezeichnet wird, und einem Lesegerät. Dabei ist der Transponder meist ohne eigene Energiequelle aufgebaut und die benötigte Energie wird im Wesentlichen induktiv vom Lesegerät bezogen. Weiters sind auch Funksysteme bekannt, bei denen das elektronische Identifikationsmedium ein aktiver Sender mit eigener Energiequelle ist (z.B. Fernöffnung der Zentralverriegelung für Kraftfahrzeuge).

Neben der elektromagnetischen oder induktiven Datenübertragung ist in der Schließtechnik auch die kapazitive Übermittlung von Identifikationsdaten bekannt. Verfahren und Vorrichtungen zur kapazitiven Übermittlung von Identifikationsdaten sind beispielsweise in den Schriften WO 2007/128009 A1, EP 1168678 A1 und WO 00/15931 A1 beschrieben. Der Vorteil der kapazitiven Datenübertragung liegt darin, dass die Datenübertragung zwischen dem elektronischen Schlüssel und der Zutrittskontrollvorrichtung nicht abgehört oder abgefangen werden kann. Die kapazitive Datenübertragung funktioniert so, dass der elektronische Schlüssel ein kapazitives Nahfeld erzeugt, über welches die zu übertragenden Daten ausgesendet werden. Das kapazitive Nahfeld wird hierbei an die den Schlüssel tragende Person eingekoppelt und über die Person weitertransportiert. Weiters weist die Empfangseinheit der Zutrittskontrollvorrichtung wenigstens eine kapazitive Koppelfläche auf, sodass sich bei Berührung der Zutrittskontrollvorrichtung oder bei Annäherung an die Zutrittskontrollvorrichtung durch die Person ein Wechselstromkreis schließt und ein elektrischer Fluss durch die Zutrittskontrollvorrichtung entsteht, der von der Empfangseinheit erfasst werden kann. Die kapazitive Datenübertragung hat zur Folge, dass der elektronische Schlüssel selbst nicht in unmittelbare Nähe zum Empfänger der Zutrittskontrollvorrichtung gebracht werden muss und es bedarf keiner gesonderten Aktivierung des Schlüssels, beispielsweise durch einen Knopfdruck. Vielmehr reicht es aus, wenn der elektronische Schlüssel sich in Körpernähe des jeweiligen Benutzers befindet, beispielsweise in einer Hosentasche, Aktentasche oder dgl. Die zu übertragenden Daten können hierbei beispielsweise auf eine vom elektronischen Schlüssel generierte Trägerfrequenz aufmoduliert werden.

Die Bedienerfreundlichkeit der Zutrittskontrolle wird dadurch wesentlich erhöht und es wird überdies sichergestellt, dass eine Datenübertragung lediglich dann erfolgt, wenn die den Schlüssel tragende Person sich der Zutrittskontrollvorrichtung nähert oder diese berührt, sodass Manipulationsmöglichkeiten durch Dritte nahezu ausgeschlossen sind. Weiters ist durch den Umstand, dass ein niedrig energetisches, kapazitives Nahfeld zur Anwendung gelangt, der Energieverbrauch des Zutrittskontrollsystems, insbesondere des elektronischen Schlüssels, äußerst gering.

Allerdings gibt es bei der kapazitiven Datenübertragung eine Reihe von Schwierigkeiten, da die Datenübertragung stark von den Umgebungsbedingungen am Einbauort des Schlosses abhängt, die den Verlauf des sich kapazitiv ausbildenden Wechselstromkreises beeinflussen. Einflussfaktoren sind z.B. die Anordnung von metallischen Objekten in der Umgebung des Schlosses, die Anordnung des Schlüssels bzw. Identifikationsmediums am Körper des Benutzers bzw. relativ zur Empfängereinheit der Zutrittskontrollvorrichtung oder die Bodenbeschaffenheit.

Ein weiterer Nachteil der kapazitiven Datenübertragung ist die Möglichkeit eines "Man in the Middle" Angriffes, bei dem eine unberechtigte Person sich zwischen eine ein berechtigtes Identifikationsmedium tragende Person und die Zutrittskontrollvorrichtung platziert und gleichsam eine Kommunikationsbrücke zwischen dem am Körper der berechtigten Person getragenen Identifikationsmedium und der Zutrittskontrollvorrichtung herstellt.

Die Erfindung zielt daher darauf ab, eine Zutrittskontrollvorrichtung sowie einen zugehörigen Schlüssel derart weiterzubilden, dass der Sperrvorgang möglichst zuverlässig funktioniert, wobei die Einsetzbarkeit des Schlüssels möglichst unabhängig von der Ausbildung des Schlosses als mechanisches, mechatronisches oder elektronisches Schloss gewährleistet sein soll. Weiters zielt die Erfindung darauf ab, die Gefahr eines Zutritts durch Unberechtigte zu minimieren.

Zur Lösung dieser Aufgabe ist ein Kombinationsschlüssel der eingangs genannten Art derart weitergebildet, dass das Kommunikationsmodul für die kapazitive Datenübertragung ausgebildet ist. Dadurch, dass der erfindungsgemäße Schlüssel eine konventionelle mechanische Sperrfunktion mit der Möglichkeit einer kapazitiven Datenübermittlung kombiniert, kann der Schlüssel in einer Vielzahl unterschiedlicher Anwendungsfälle zum Einsatz gelangen, wobei in Abhängigkeit von der Beschaffenheit der Zutrittskontrollvorrichtung und/oder von den die kapazitive Datenübertragung beeinflussenden Umgebungsbedingungen eine mechanische bzw. magnetische Identifikationsabfrage oder eine kapazitive Identifikationsprüfung oder beides erfolgen kann. So kann die mechanische Sperrfunktion beispielsweise ein Notsystem bilden, wenn die kapazitive Datenübertragung nicht zuverlässig funktioniert.

Innerhalb einer Schließanlage mit einer Mehrzahl von Zutrittskontrollvorrichtungen, ermöglicht es der erfindungsgemäße Schlüssel Zutrittskontrollvorrichtungen mit niedrigerer Sicherheitsstufe vorzusehen, die lediglich eine kapazitive Identifikationsüberprüfung umfassen, und Zutrittskontrollvorrichtungen mit höherer Sicherheitsstufe vorzusehen, die ergänzend zur kapazitiven Identifikationsüberprüfung eine mechanische Sperrfunktion umfassen. Die Kombination einer kapazitiven Identifikationsüberprüfung mit einer mechanischen Sperrfunktion verhindert wirksam einen "Man in the Middle" Angriff, da die mechanische Sperrfunktion voraussetzt, dass der Schlüsselinhaber den Schlüssel in das Schloss, insbesondere Zylinderschloss einführt und sich daher tatsächlich unmittelbar vor der zu öffnenden Tür befindet.

Außerdem ermöglicht die Integration des kapazitiven Kommunikationsmoduls in einen in konventioneller Art ausgebildeten Schlüssel mit Reide und Schlüsselbart eine Anordnung der Koppelelektroden, die für kapazitive Kopplung optimiert ist. Die Erfindung ist zu diesem Zwecke bevorzugt derart weitergebildet, dass das Kommunikationsmodul eine Elektrodenanordnung mit einer ersten Elektrode im Schlüsselbart und wenigstens einer zweiten Elektrode in der Reide aufweist. Eine weitere bevorzugte Ausbildung sieht vor, dass die Elektrodenanordnung eine dritte Elektrode umfasst, die parallel zur zweiten Elektrode in der Reide angeordnet ist.

Wenigstens zwei Elektroden des Kommunikationsmoduls bilden jedenfalls bevorzugt einen Empfangs- oder Sendekondensator.

Dabei hat sich in der Praxis gezeigt, dass die kapazitive Kopplung zwischen dem Schlüssel und der Zutrittskontrollvorrichtung besser ist, wenn die erste und die zweite Elektrode nicht in derselben Ebene angeordnet sind. Dies wird dadurch erklärt, dass das Signal des Schlüssels bei dieser Elektrodenanordnung besser an die den Schlüssel tragende Person gekoppelt wird.

Wenn sich, wie dies einer bevorzugten Weiterbildung entspricht, die erste Elektrode nur wenig oder gar nicht mit der zweiten und ggf. dritten Elektrode überdeckt, wird das interne, im Wesentlichen elektrische Feld des kapazitiven Kommunikationsmoduls auf ein Minimum begrenzt, wodurch beim Umladen der Elektroden weniger Verlust in der Schaltung und in den Elektroden auftritt.

Für die Ausgestaltung der Elektroden gibt es viele Möglichkeiten, wobei jedenfalls auf eine platzsparende Integration in die konventionelle Bauform eines Schlüssels geachtet werden sollte. Bevorzugt ist vorgesehen, dass der Schlüsselbart zumindest teilweise aus einem elektrisch leitfähigen Material besteht und die erste Elektrode ausbildet. Weiters ist bevorzugt vorgesehen, dass die zweite und die dritte Elektrode von einer elektrisch leitenden Außenfläche der Reide gebildet werden, die durch eine isolierende Schicht voneinander elektrisch isoliert sind. Bevorzugt erstreckt sich die zweite und ggf. die dritte Elektrode über die gesamte Fläche der Reide. Die zweite und die dritte Elektrode können beispielsweise als leitende Beschichtung an gegenüberliegenden Außenseiten der Reide ausgebildet sein. Wenn die Reide nur eine zweite Elektrode, aber keine dritte Elektrode aufweist, kann die zweite Elektrode als leitende Beschichtung an einer der beiden Außenseiten der Reide ausgebildet sein.

Die Anordnung der zweiten und ggf. dritten Elektrode an der Außenseite bzw. Außenoberfläche der Reide erlaubt es, die erste Elektrode in die Reide hineinragen zu lassen, sodass sie insbesondere zwischen der zweiten und der dritten Elektrode, aber mit Abstand zu diesen zu liegen kommt, wobei die erste Elektrode vorzugsweise eine Überlappung mit der zweiten und/oder der dritten Elektrode aufweist. Das Ausmaß der Überlappung kann hierbei von den jeweiligen Platzverhältnissen oder von den gewünschten kapazitiven Koppeleigenschaften abhängig gemacht werden.

Unter bestimmten Umständen kann es vorteilhaft sein, dass das Kommunikationsmodul eine Schaltung aufweist, um die erste Elektrode mit der zweiten oder der dritten Elektrode elektrisch leitend zu verbinden. Dadurch können die Elektroden so zusammengefasst werden, dass z.B. die erste Elektrode mit der zweiten Elektrode leitend verbunden wird, die gemeinsam die eine Koppelelektrode ausbilden, und dass die dritte Elektrode die andere Koppelelektrode ausbildet, sodass sich eine optimale Kopplung sowohl an die Person, als auch zur Zutrittskontrollvorrichtung ergibt.

Die Form der ersten Elektrode kann an die mechanischen Vorgaben des mechanischen Schließsystems angepasst sein. In bevorzugten Ausführungen werden die Abmaße der Elektroden so gewählt, dass sich ein Schlüssel mit für einen mechanischen Schlüssel in etwa üblichen Abmessungen ergibt. Die Schlüsselreide kann aus einem leitenden Material gebildet werden, wodurch diese auch mit der in der Schlüsselreide angeordneten zweiten oder ggf. dritten Elektrode verbunden sein kann. In einer weiteren bevorzugten Ausführung bildet das elektrisch leitfähige Material der Schlüsselreide alleinig die zweite und ggf. dritte Elektrode aus. Dabei können in einer weiteren bevorzugten Ausführung Teile der Schlüsselreide so voneinander elektrisch isoliert sein, dass sich die zweite und die dritte und ggf. weitere Elektroden an bzw. in der Schlüsselreide ergeben. In weiteren bevorzugten Ausführungen kann ein Teil oder eine Seite der Schlüsselreide aus einem elektrisch nicht leitenden Material (z.B. Kunststoff) gebildet werden. Zur Ausbildung der Elektroden können auch Teile der Reide aus elektrisch leitfähigen Kunststoffen gebildet werden.

Die Erfindung betrifft weiters eine Vorrichtung umfassend eine Zutrittskontrollvorrichtung und einen erfindungsgemäßen Schlüssel, die jeweils ein Kommunikationsmodul aufweisen, um eine Datenübermittlung zwischen dem Schlüssel und der Zutrittskontrollvorrichtung zu ermöglichen, wobei der Schlüssel einen Speicher für Identifikationsdaten aufweist, der mit dem Kommunikationsmodul des Schlüssels zur Übermittlung der Identifikationsdaten an die Zutrittskontrollvorrichtung zusammenwirkt, wobei die Zutrittskontrollvorrichtung eine Auswerteschaltung zur Feststellung der Zutrittsberechtigung auf Grund der empfangenen Identifikationsdaten aufweist und die Auswerteschaltung mit Freigabemitteln zum wahlweisen Freigeben oder Sperren des Zutritts zusammenwirkt, wobei die Kommunikationsmodule des Schlüssels und der Zutrittskontrollvorrichtung für die kapazitive Datenübertragung ausgebildet sind, sodass die Datenübermittlung zumindest teilweise über eine kapazitive Kopplung zwischen dem Schlüssel und der Zutrittskontrollvorrichtung erfolgen kann.

Unter einem Freigabemittel ist im Rahmen der Erfindung z.B. ein mechanisch wirkendes Sperrelement, das zwischen einer Sperr- und einer Freigabestellung bewegt werden kann, ein mechanisches oder magnetisches Kupplungselement, das ein Betätigungselement, wie z.B. eine Handhabe, mit einem Sperrglied koppelt oder entkoppelt, oder ein elektrisch sperr- und/oder freigebbares Sperrelement, wie z.B. ein elektrischer Türöffner, zu verstehen.

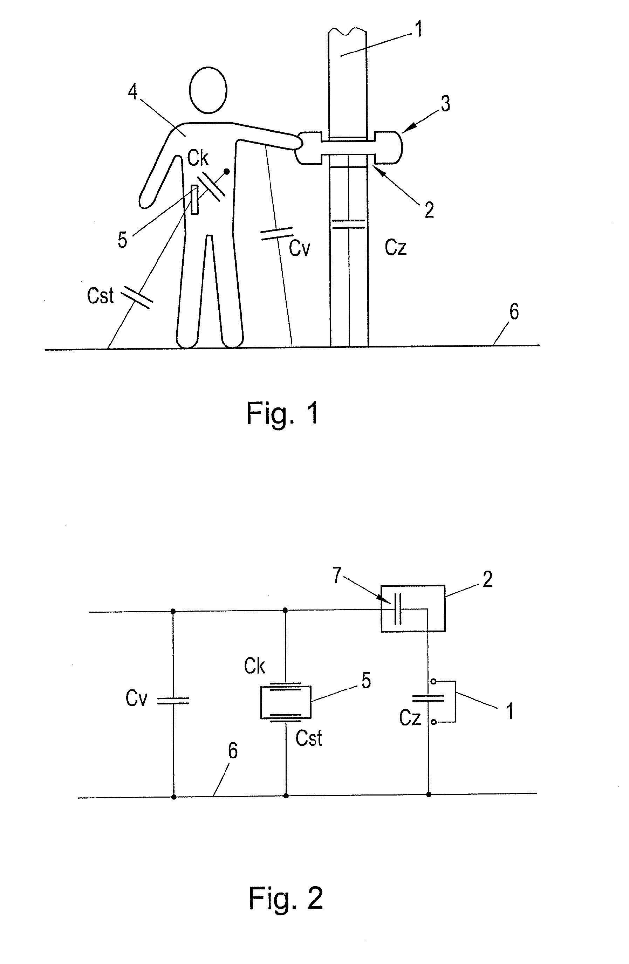

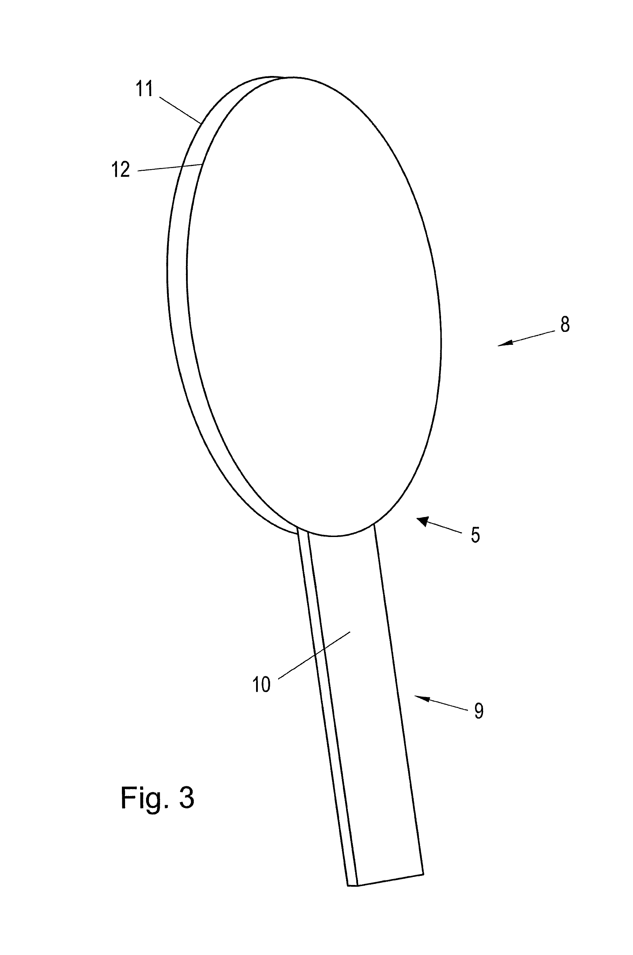

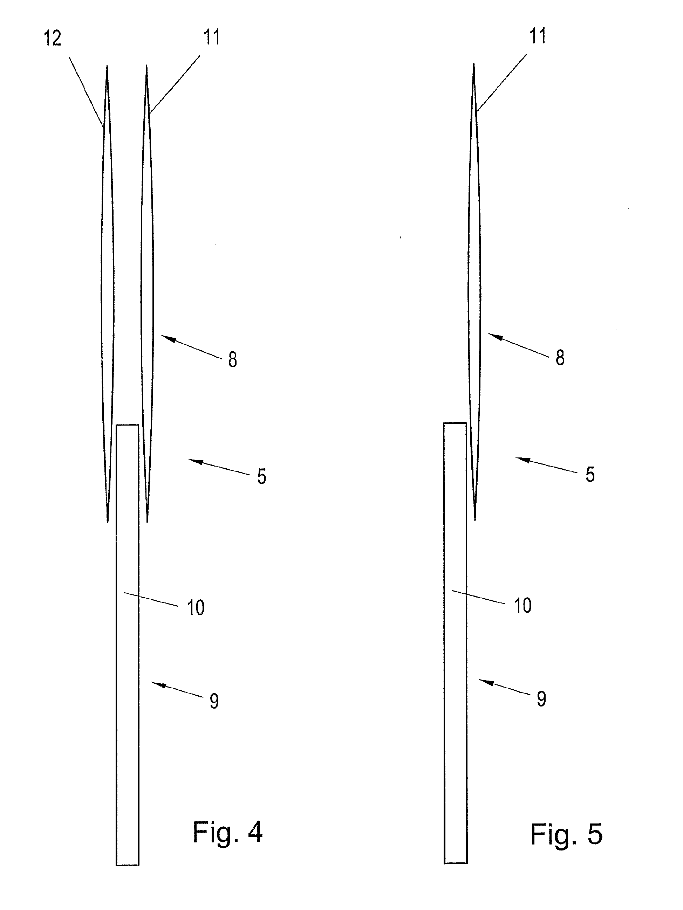

Die Erfindung wird nachfolgend anhand von in der Zeichnung dargestellten Ausführungsbeispielen näher erläutert. In dieser zeigen Fig. 1 eine schematische Darstellung der Funktionsweise einer mit kapazitiver Kopplung arbeitenden Zutrittskontrollvorrichtung, Fig. 2 ein vereinfachtes Ersatzschaltbild der Ausbildung gemäß Fig. 1, Fig. 3 eine erste Ausbildung des erfindungsgemäßen Schlüssels in einer ersten Ansicht, Fig. 4 die erste Ausbildung des erfindungsgemäßen Schlüssels in einer zweiten Ansicht und Fig. 5 eine zweite Ausbildung des erfindungsgemäßen Schlüssels.

In Fig. 1 ist schematisch eine Tür mit einer die Tür öffnenden Person sowie die einzelnen Streu-, Verlust- und Koppelkapazitäten dargestellt. Die Tür ist mit 1 bezeichnet und weist eine Zutrittskontrollvorrichtung 2 mit einem als Knauf ausgebildeten Betätigungsglied 3 auf. Die Person 4 trägt einen Schlüssel 5, welcher beispielsweise in einer Hosentasche eingesteckt sein oder in der Hand der Person 4 getragen werden kann. Der elektronische Schlüssel 5 erzeugt hierbei ein kapazitives Nahfeld, z.B. mit einer Trägerfrequenz, auf welches Identifikationsdaten aufmoduliert werden. Das kapazitive Nahfeld wird auf die Körperoberfläche der Person 4 eingekoppelt und in der Folge an einen Empfänger der Zutrittskontrollvorrichtung 2 weitergeleitet. Dabei weist der elektronische Schlüssel 5 eine Streukapazität Cst gegen den Boden 6 auf. Am Übergang zwischen dem elektronischen Schlüssel 5 und der Person 4 ist eine Koppelkapazität Ck zu beobachten. Weiters tritt eine Verlustkapazität Cv zwischen der Person 4 und dem Boden 6 auf. Schließlich weist die Zutrittskontrollvorrichtung 2 bzw. deren Schließzylinder eine Zylinderkapazität Cz gegen den Boden auf.

Das entsprechende vereinfachte Ersatzschaltbild ist in Fig.2 dargestellt, wobei wiederum die beschriebenen Kapazitäten angeführt sind. Dabei bildet Cv alle Kapazitäten nach, welche elektrische Flüsse zur Folge haben, welche sich vom Sender nicht über den Empfangskondensator 7 des Empfängers schließen, sondern an diesem vorbeigehen und somit nichts zur Koppelung zwischen Empfänger und Sender beitragen. Cst bildet die Kapazitäten nach, welche als Summe für die kapazitive Koppelung der Sendeelektrode gegen den Boden zur Verfügung steht. Ck bildet die Kapazitäten nach, welche als Summe für die kapazitive Koppelung der Person 4 zur zweiten Elektrode zur Verfügung steht. Cz bildet die Kapazitäten nach, welche als Summe für die kapazitive Koppelung von der Zutrittskontrollvorrichtung 2 bzw. deren Schließzylinder zum Boden zur Verfügung steht. Dabei weist die Zutrittskontrollvorrichtung 2 einen Empfangskondensator 7 auf. Die Auslegung des Empfangskondensators 7 ist derart zu treffen, dass sich über den Empfangskondensator 7 einerseits ein ausreichender elektrischer Fluss schließt und dass andererseits die Spannung am Kondensator nicht zu klein wird. Ist die Kapazität des Empfangskondensators 7 zu klein, so schließt sich zu wenig elektrischer Fluss über diesen. Allerdings ist auch eine zu große Kapazität des Empfangskondensators 7 in der Art störend, dass die Spannung am Kondensator U=Q/C ungünstig klein wird.

Fig. 3 zeigt die erfindungsgemäße Ausbildung des Schlüssels 5. Der Schlüssel 5 weist eine schematisch dargestellte Reide 8 und einen schematisch dargestellten Schlüsselbart 9 auf. Der Schlüsselbart 9 ist mit einer in der Figur nicht dargestellten mechanischen Codierung versehen, um in den Schlüsselkanal eines Zylinderschlosses eingeführt zu werden und das Zylinderschloss bei Bedarf mechanisch zu sperren. Die Reide 8 kann etwas dicker ausgeführt sein als der Schlüsselbart 9 und beherbergt einen elektronischen Speicher (nicht dargestellt) für Identifikationsdaten und ein über kapazitive Kopplung arbeitendes Kommunikationsmodul (nicht dargestellt), um Daten kapazitiv mit der Zutrittskontrollvorrichtung 2 auszutauschen. Die Antenne des Kommunikationsmoduls ist als Elektrodenanordnung ausgebildet.

Der Schlüsselbart 9 ist aus einem elektrisch leitfähigen Material ausgebildet und fungiert als erste Elektrode 10. Die zweite und die dritte Elektrode sind in der Reide 8 angeordnet und schematisch mit 11 und 12 bezeichnet. Wie in der Fig. 4 ersichtlich, ist die erste Elektrode 10 mit ihrem in die Reide 8 hineinragenden Endbereich zwischen den Elektroden 11 und 12 angeordnet, wobei sie von den Elektroden 11 und 12 jedoch elektrisch isoliert ist. Ebenso sind die parallel zueinander verlaufenden Elektroden 11 und 12 voneinander elektrisch isoliert.

In der alternativen Ausbildung gemäß Fig. 5 wurde auf die dritte Elektrode 12 verzichtet.

## Patentansprüche

1. Schlüssel umfassend eine Reide, einen eine mechanisch und/oder magnetisch abtastbare Codierung aufweisenden Schlüsselbart und einen elektronischen Speicher für Identifikationsdaten, der mit einem Kommunikationsmodul zum insbesondere drahtlosen Auslesen der Identifikationsdaten zusammenwirkt, **dadurch gekennzeichnet, dass** das Kommunikationsmodul für die kapazitive Datenübertragung ausgebildet ist.

2. Schlüssel nach Anspruch 1, **dadurch gekennzeichnet, dass** das Kommunikationsmodul eine Elektrodenanordnung mit einer ersten Elektrode (10) im Schlüsselbart (9) und wenigstens einer zweiten Elektrode (11) in der Reide (8) aufweist.

3. Schlüssel nach Anspruch 2, **dadurch gekennzeichnet, dass** die Elektrodenanordnung eine dritte Elektrode (12) umfasst, die im Wesentlichen parallel zur zweiten Elektrode (11) in der Reide (8) angeordnet ist.

4. Schlüssel nach Anspruch 1, 2 oder 3, **dadurch gekennzeichnet, dass** der Schlüsselbart (9) zumindest teilweise oder zur Gänze aus einem elektrisch leitfähigen Material besteht und die erste Elektrode (10) ausbildet.

5. Schlüssel nach Anspruch 3 oder 4, **dadurch gekennzeichnet, dass** die zweite (11) und die dritte (12) Elektrode von einer elektrisch leitenden Außenfläche der Reide (8) gebildet werden, die durch eine isolierende Schicht voneinander elektrisch isoliert sind.

6. Schlüssel nach einem der Ansprüche 2 bis 5, **dadurch gekennzeichnet, dass** das Kommunikationsmodul eine Schaltung aufweist, um die erste Elektrode (10) mit der zweiten (11) oder der dritten Elektrode (12) elektrisch leitend zu verbinden.

7. Schlüssel nach einem der Ansprüche 1 bis 6, **dadurch gekennzeichnet, dass** wenigstens zwei Elektroden (10,11,12) des Kommunikationsmoduls einen Empfangs- oder Sendekondensator (7) bilden.

8. Schlüssel nach einem der Ansprüche 2 bis 7, **dadurch gekennzeichnet, dass** die erste Elektrode (10) in die Reide (8) hineinragt und eine Überlappung mit der zweiten (11) und/oder der dritten (12) Elektrode aufweist.

9. Vorrichtung umfassend eine Zutrittskontrollvorrichtung und einen Schlüssel nach einem der Ansprüche 1 bis 8, die jeweils ein Kommunikationsmodul aufweisen, um eine Datenübermittlung zwischen dem Schlüssel und der Zutrittskontrollvorrichtung zu ermöglichen, wobei der Schlüssel einen Speicher für Identifikationsdaten aufweist, der mit dem Kommunikationsmodul des Schlüssels zur Übermittlung der Identifikationsdaten an die Zutrittskontrollvorrichtung zusammenwirkt, wobei die Zutrittskontrollvorrichtung eine Auswerteschaltung zur Feststellung der Zutrittsberechtigung auf Grund der empfangenen Identifikationsdaten aufweist und die Auswerteschaltung mit Freigabemitteln zum wahlweisen Freigeben oder Sperren des Zutritts zusammenwirkt, **dadurch gekennzeichnet, dass** das Kommunikationsmodul des Schlüssels (5) und der Zutrittskontrollvorrichtung (2) für die kapazitive Datenübertragung ausgebildet ist, sodass die Datenübermittlung zumindest teilweise über eine kapazitive Kopplung zwischen dem Schlüssel (5) und der Zutrittskontrollvorrichtung (2) erfolgen kann.
